(19)

**Europäisches Patentamt**
**European Patent Office**
**Office européen des brevets**

(11) **EP 2 224 575 B1**

(12) **EUROPEAN PATENT SPECIFICATION**

(45) Date of publication and mention
of the grant of the patent:
**24.08.2016 Bulletin 2016/34**

(51) Int Cl.:
***H02J 7/00*** *(2006.01)*

(21) Application number: **09153797.7**

(22) Date of filing: **26.02.2009**

(54) **Method and apparatus for dynamic battery management control in a mobile communication device**

Verfahren und Vorrichtung zur dynamischen Batterieverwaltungssteuerung in einer mobilen Kommunikationsvorrichtung

Procédé et appareil pour le contrôle de la gestion dynamique de batterie dans un dispositif de communication mobile

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**01.09.2010 Bulletin 2010/35**

(73) Proprietor: **BlackBerry Limited**
**Waterloo, ON N2K 0A7 (CA)**

(72) Inventors:
 • **Wu, Chee-Ming, Jimmy**
  **Waterloo, Ontario N2L 5R9 (CA)**
 • **Winger, Lyall, Kenneth**
  **Waterloo, Ontario N2L 3W8 (CA)**
 • **Book, Christopher, Simon**
  **Waterloo, Ontario N2L 5R9 (CA)**

(74) Representative: **Reichl, Wolfgang et al**
**MERH-IP**
**Matias Erny Reichl Hoffmann**
**Patentanwälte PartG mbB**
**Paul-Heyse-Straße 29**
**80336 München (DE)**

(56) References cited:
 **EP-A- 1 148 613**      **WO-A-99/31752**
 **US-A- 5 349 535**      **US-A- 5 592 069**
 **US-A1- 2005 134 225**   **US-A1- 2006 049 805**

 • **DO-HYUNG KIM ET AL: "Design and Implementation of Smartphone Edition based on Embedded Linux", ADVANCED COMMUNICATION TECHNOLOGY, 2008. ICACT 2008. 10TH INTERNATIONAL CONFERENCE ON, IEEE, PISCATAWAY, NJ, USA, 17 February 2008 (2008-02-17), pages 328-331, XP031245158, ISBN: 978-89-5519-136-3**
 • **ANONYMOUS: 'Microsoft Windows Mobile 5.0 Reviewers Guide for Smartphones', [Online] 01 January 2006, pages 1 - 70, XP008138018 REVIEWERS GUIDE, MICROSOFT, US Retrieved from the Internet: <URL:http://www.microsoft.com/presspass/newsroom/mobile/docs/smartphoneRGFINAL.doc>**
 • **ANONYMOUS: 'Nokia E60 and Nokia E70 Smartphones' INTERNET CITATION, [Online] 01 January 2005, pages 1 - 2, XP008131145 Retrieved from the Internet: <URL:http://www.europe.nokia.com/BaseProject/Sites/Nokia_Europe_18022/CDA/Categories/Business/MobileApplications/AvayaMobileforS60Platform/AvayaMobileforS60PlatformCompatibility/_Content/_Static_Files/nokia_and_avaya_voipdatasheet.pdf> [retrieved on 2011-01-07]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD

The technology described in this patent document relates generally to systems and devices that monitor a battery. More particularly, systems and methods are provided for monitoring the operating characteristics of a battery.

BACKGROUND

Modern mobile communication devices, such as cell phones, PDAs, etc., typically use a rechargeable battery. The characteristics of the battery, including battery capacity versus voltage, impedance at various temperatures, etc., are known during production of the battery and may subsequently be programmed into the mobile communication device. These characteristics are typically used by the mobile communication device for calibration, or for providing battery status and usage information to the user of the device. If the battery is updated or modified after production, however, then the information programmed into the mobile communication device may no longer be applicable or provide accurate information to the user. Furthermore, changes in the environment of the battery, or the age of the battery, can affect the accuracy of the characteristics programmed into the mobile communication device.
EP1148613 describes a method for charging a battery comprising the steps of connecting to a home page via the Internet, selecting the mode of use of the battery desired by the user, downloading the charging characteristics which match the selected mode of use, and reading the charging characteristics into an EEPROM of a charging device. US2006/049805 describes a method and system for accurately reporting battery capacity. The disclosed method and system prevent the reporting of discontinuous capacity values resulting from starting or stopping recharge cycles. The disclosed method and system prevent over or under reporting of battery capacity due to the transition between charge and discharge curves in a battery model.
The invention is defined by a system for downloading battery data to a mobile communication device, a mobile communication device, a data server for storing battery profiles and a method for wirelessly downloading battery data on a mobile communication device, with the technical features of (respectively) independent claims 1, 15, 17 and 18.

SUMMARY

In accordance with the teachings described herein, systems and methods are provided for downloading battery data to a mobile communication device. A system for downloading battery data to a mobile communication device may include a mobile communication device and a data server. The mobile communication device may be configured to monitor a battery operating condition and to receive a battery profile, the battery profile including battery data for use by the mobile communication device to calculate battery status information. The data server may be used for storing battery data, the data server being configured to receive the battery operating condition from the mobile communication device and, based on the battery operating condition, send the battery profile to the mobile communication device.

BRIEF DESCRIPTION OF THE DRAWINGS

Figs. 1-3 are block diagrams depicting example systems for determining the status of a rechargeable battery.
Fig. 4 is an example battery measurement subsystem for a mobile communication device.
Fig. 5 is a flowchart of an example battery capacity processing method.
Fig. 6 is an example data server for storing battery profiles.
Fig. 7 is an example data server utilizing a battery model to generate a battery profile.
Fig. 8 is an example data server utilizing a battery model and a battery table selector.
Fig. 9 is a flowchart of an example method for downloading battery data on a mobile communication device.
Fig. 10 is a block diagram of an example mobile communication device.

DETAILED DESCRIPTION

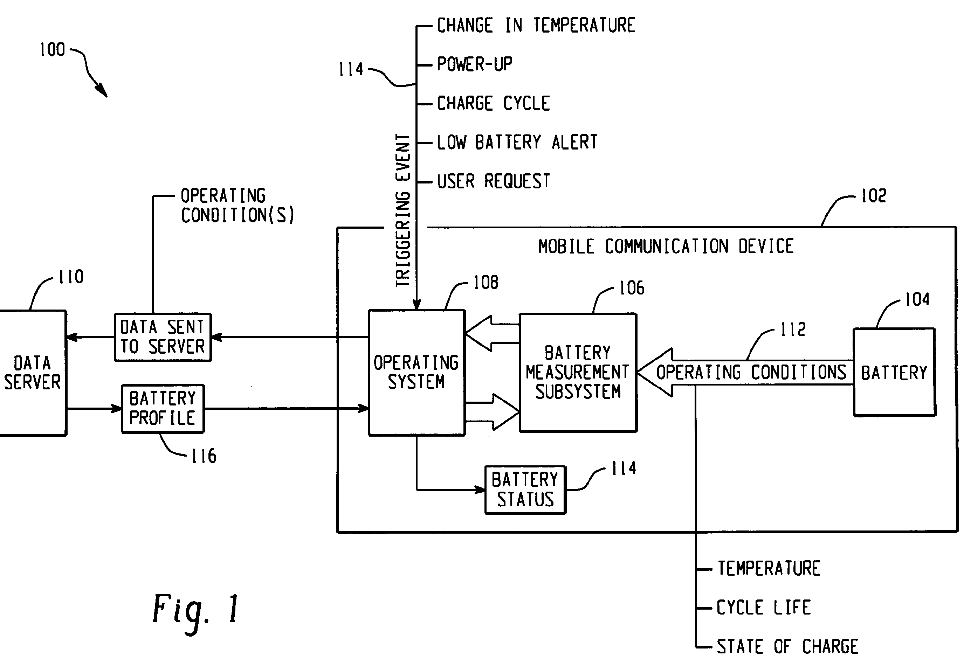

Fig. 1 is a block diagram depicting an example system 100 for determining the status of a rechargeable battery. The system includes a mobile communication device 102 and a data server 110. The mobile communication device 102 includes a rechargeable battery 104, a battery management subsystem 106, and an operating system 108. It should be understood, however, that the system 100 may also be used with other types of systems or devices that utilize a rechargeable battery.

The system 100 may be used to wirelessly download battery data to a mobile communication device 102. The mobile communication device 102 uses information stored in a battery profile, including operating conditions gathered from a battery 104 and battery characteristics preloaded during manufacture, to update the status of the battery to the user. As conditions of the mobile communication device 102 and the battery 104 change, the mobile communication device 102 may need different battery data to accurately determine the status of the battery 104. For example, deterioration of the battery 104 is not a factor that a manufacturer typically preprograms into the mobile communication device 102 to use in calculating the battery status. Another example is a wide change in the ambient temperature of the battery 104 that the mobile communication device may not be capable of handling. When those conditions change during the life of the battery 104, the operating system 108 cannot account for the changed conditions using a battery profile that was loaded during the manufacturing process.

To account for changed conditions, the mobile communication device 102 may be programmed with one or more triggering events 114 that cause the mobile communication device 102 to request updated battery data from a data server 110. A triggering event 114 that prompts the operating system 108 to send operating conditions 112 to the data server 110 may include a change in ambient temperature, a power-up of the mobile communication device, a new charge cycle of the battery, a low battery alert, and a request by the user of the mobile communication device. Following the triggering event 114, the mobile communication device 102 sends its current battery operating conditions 112 to the data server 110 so the mobile communication device 102 can receive an updated battery profile 116.

The data server 110 contains information used to characterize a battery in the form of battery profiles. The data server 110 receives the battery operating conditions 112 from the mobile communication device 102 and wirelessly transmits the corresponding battery profile 116 back to the device. The mobile communication device 102 may replace its existing battery profile with the battery profile 116 received from the data server 110. This new battery profile can be used to update the status of the battery on the mobile communication device. A benefit to updating a battery profile on the mobile communication device is that the information will be more applicable to the present condition of the battery. Thus, more accurate information will be available that allows the mobile communication device 102 to more efficiently use the battery 104 and provide more reliable information to the end user.

The mobile communication device 102 includes a rechargeable battery 104, a battery management subsystem 106, and an operating system 108. The battery management subsystem 106 may include one or more processing devices, such as a microprocessor or a DSP, and may also include one or more sensor devices for detecting operating conditions 112 of the battery 104. For example, the battery monitoring subsystem 106 may include sensor devices that allow the battery monitoring subsystem 106 to provide the operating system 108 with the ambient temperature of the battery 104 and the state of charge of the battery 104 to the operating system 108. The battery monitoring subsystem 106 may also include other devices or software to monitor the cycle life of the battery. The operating system 108 controls the overall operation of the mobile communication device 102 and may include one or more microprocessors, DSPs, or other processing devices. Operating conditions received at the operating system 108 are used to update the battery status 114 of the mobile communication device 102.

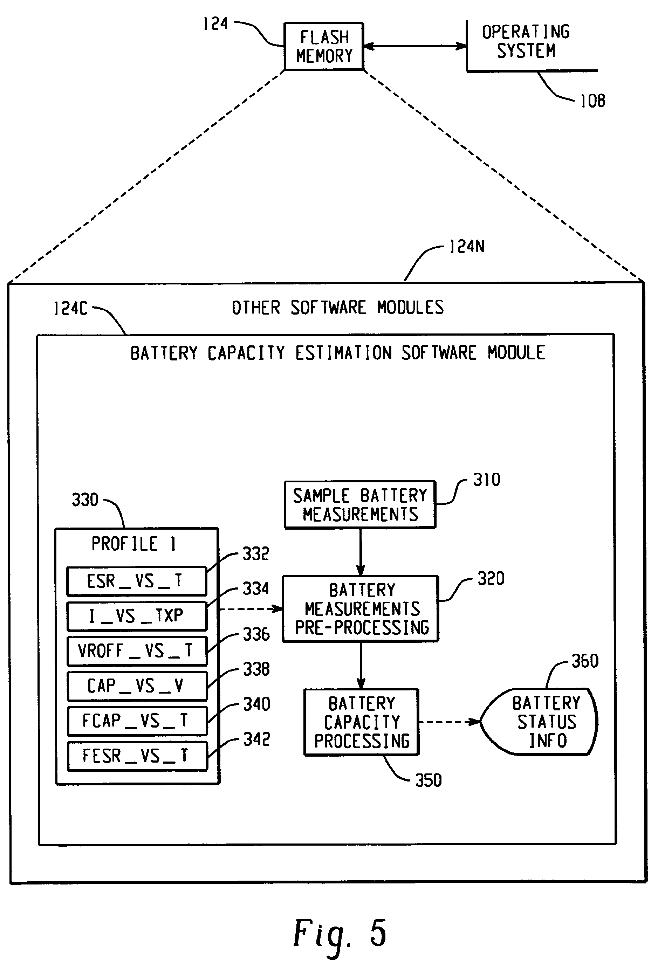

Battery status 114 may include the fully charged capacity of the battery (the total capacity capable in the battery), the current usable capacity of the battery (the present capacity available in the battery), and the equivalent series resistance of the battery. The battery status 114 of the mobile communication device is based upon combinations of preloaded battery characteristics and operating conditions 112. These combinations are referred to as battery profiles, and are described in more detail below in reference to Fig. 5.

The data server 110 is configured to receive battery operating conditions 112 from a mobile communication device 102 and send battery data to the mobile communication device 102 based on the received operating conditions 112. The data server 110 stores battery data that includes battery profiles, which are linked to a corresponding battery and its battery operating conditions. Battery profiles include battery tables that contain battery operating conditions and battery characteristics. Each battery table includes a battery operating condition that is stored in relation to another battery operating condition or in relation to a battery characteristic. For instance, one battery table may include the temperature of the battery in relation to the equivalent series resistance of the battery (e.g., see battery table 332 in Fig. 5). The combination of the two elements allows the mobile communication device 102 to update the status of the battery 104. A battery profile may include any number of battery tables depending on the requirements of the mobile communication device 102 requesting the information. A complete battery profile, however, will contain each battery table that a particular mobile communication device uses to determine the battery status of its battery.

After the data server 110 receives the battery operating conditions 112, it selects the battery profile 116 that corresponds to the battery operating conditions 112. The data server 110 sends the battery profile 116 to the mobile communication device 102, which uses the battery profile 116 to calculate the battery status 114. The received battery profile 116 is used until the operating system 108 receives another triggering event 114, and subsequently receives another battery profile 116.

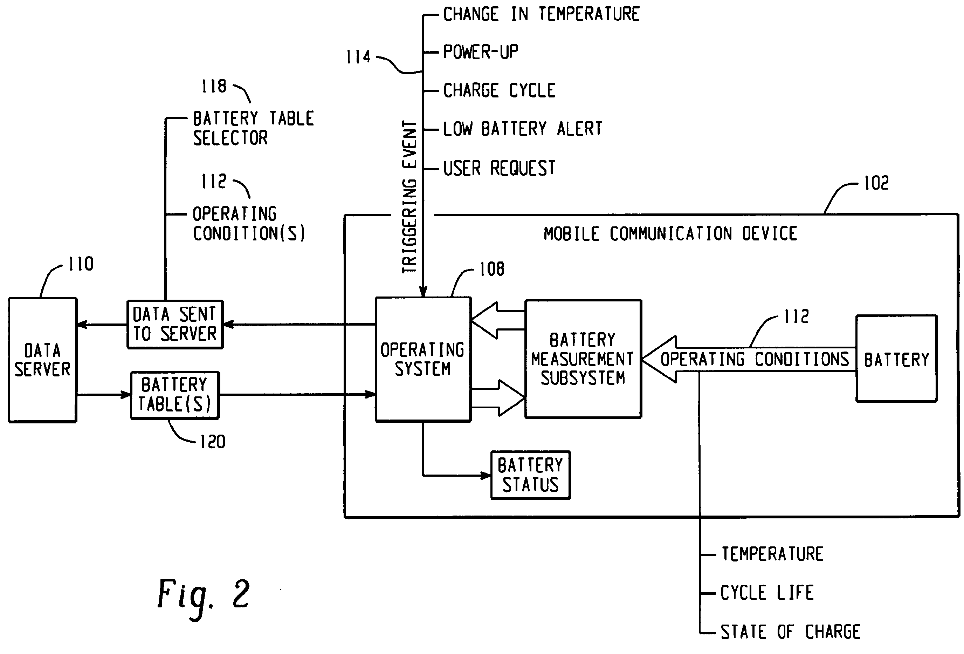

Fig. 2 depicts another example system for determining the status of a rechargeable battery. This system is similar to the system depicted in Fig. 1, except that the data server 110 returns only a selected battery table(s) 120, instead of the entire battery profile. As shown in Fig. 2, the operating system 108 sends a battery table selector 118 to the data server 110 to request only a portion of a battery profile. The battery table selector 118 may either be sent at a time before or after the operating conditions 112 are sent to the data server 110, or at the same time. The data server 110 uses the battery table selector 118 to select a specific battery table 120 from a battery profile that corresponds to the operating conditions 112. For example, if the triggering event 114 is a change in ambient temperature, the battery table selector 118 may direct the data server 110 to send only the one or more battery tables 120 that correspond to temperature, instead of sending the entire battery profile. The operating system 108 receives the one or more battery tables 120 and replaces only those corresponding portions of the battery profile stored on the mobile communication device 102. By replacing only a selected portion of the battery profile, the amount of processing is reduced on the mobile communication device and less network bandwidth is used.

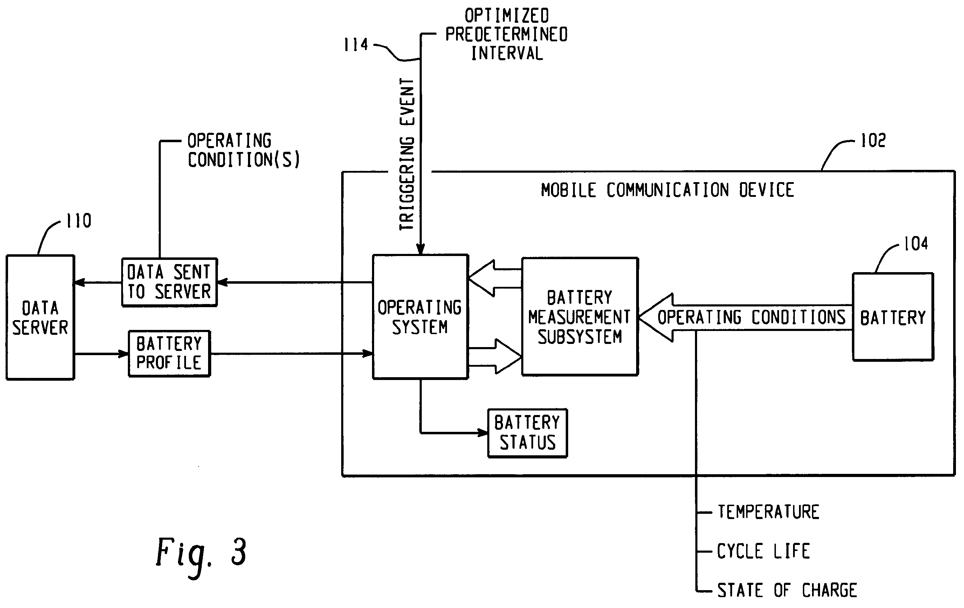

Fig. 3 illustrates yet another example system for determining the status of a rechargeable battery. In this example, the mobile communication device 102 automatically triggers the data server 110 to transmit a current battery profile at predetermined intervals 114. Further, the interval at which an updated battery profile is requested may be set so that the combination of receiving a battery profile, or battery tables, and battery life is optimized. The shorter the interval set to receive information from the data server, the larger a strain it will have on the battery 104 and on the wireless network. A shorter interval, however, will receive more frequent battery profiles, or tables, and provide for a more exact battery status. Thus, the optimized predetermined interval 114 may be calculated to provide for the most frequent amount of information received from the data server 110, without sacrificing a significant portion of battery life.

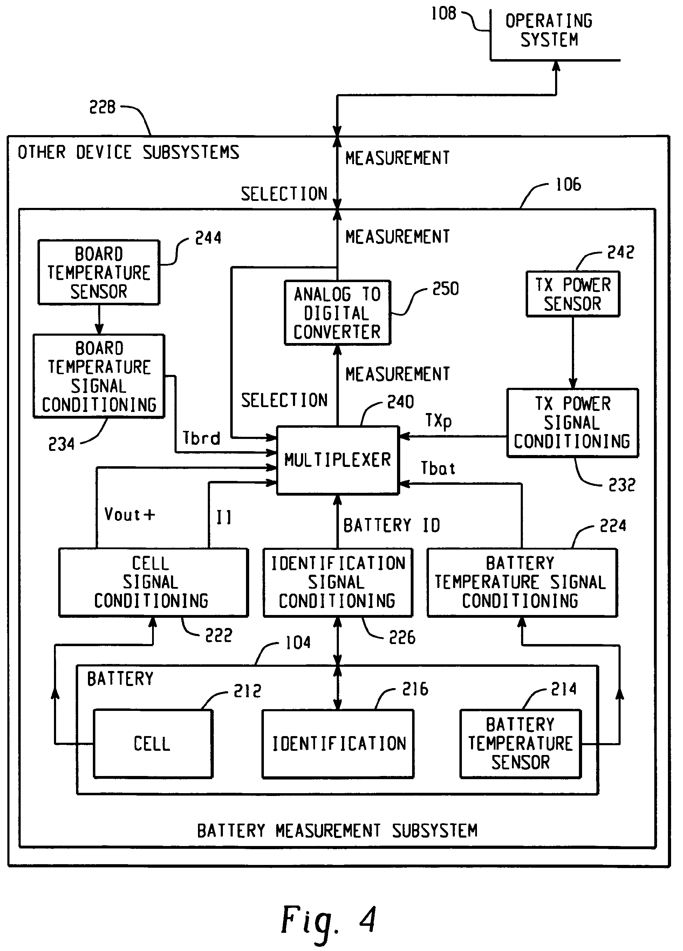

Fig. 4 illustrates an example battery measurement subsystem 106 for a mobile communication device that can be utilized in a system to download battery data to the mobile communication device, such as the systems shown in Figs. 1-3. The battery measurement subsystem 106 may receive a selection command from the operating system 108 and send a measurement value (i.e., a value indicating the battery state) to the operating system 108 in response to the selection command.

The battery measurement subsystem 106 includes a battery 104 that powers the mobile communication device. The battery 104 includes a cell 212, a battery temperature sensor 214, and an identification block 216. The identification block 216 may enable the operating system 108 to determine the type of battery 210.

The battery temperature sensor 214 provides a battery temperature signal that indicates the temperature of the battery 104. A battery temperature signal conditioning block 224 conditions the battery temperature signal to generate the signal Tbat. Conditioning functions performed by the signal conditioning block include filtering, scaling and/or amplifying. The signal conditioning block 224 may also perform other functions, such as providing bias required by the identification unit 216, multiplexer 240 and/or the analog to digital converter 250. After the Tbat signal is generated, it is coupled to an input of the multiplexer 240 for selection by the microprocessor 138.

A cell signal conditioning block 222 monitors the voltage and current of the cell 212. The cell signal conditioning block 222 provides a conditioned battery voltage signal, Vout+, and a conditioned battery current signal, I1, to the inputs of the multiplexer 240 for selection by the operating system 108.

In one embodiment, the cell signal conditioning block 222 may not provide a battery current. In this case, the current may be obtained indirectly by measuring TX power and by detecting other device states that affect current, such as operation of backlight, buzzer and LED (within the other device subsystems 228), as described below.

The TX power sensor 242 detects the transmit power of the transmitter 114 (Fig. 1), and inputs the transmit power to the TX power signal conditioning block 232. The TX power conditioning block 232 performs typical conditioning functions, such as filtering, scaling or amplifying, as well as providing a bias that may be required by the TX power sensor 242, multiplexer 240 and/or the analog to digital converter 250. The TX power conditioning block 232 generates the TXp signal that is coupled to the multiplexer 240 for selection by the operating system 108.

The incremental current consumption of the additional devices, such as backlight, buzzer and LED within the other device subsystems 228, are pre-characterized and their values are stored in flash memory 124 according to the states of these devices. The software that runs on the operating system 108 controls the operation of these device states and, therefore, the states can be detected and corresponding incremental current consumptions by these devices can be included in the processing.

A board temperature sensor 244 provides a board temperature signal, Tbrd, that indicates the temperature of the printed circuit board of the transceiver. This signal is conditioned by the board temperature signal conditioning block 234 and coupled to an input of the multiplexer 240.

The identification block 216, provides the identification signal Battery ID that is conditioned by the identification signal conditioning block 226 and input to the multiplexer 240.

In operation, multiplexer 240 responds to the selection signal sent by the operating system 108 to drive a select measurement signal such as: Tbrd, Vout+, I1, TXp, Tbat or the battery ID, through the analog to digital converter 250. The analog to digital converter 250 digitizes the signal output from the multiplexer 240 and sends the digital representation of the measurement value to the operating system 108. For example, if the operating system 108 requests a battery ID, a predetermined selection command assigned to the battery ID is transmitted to the multiplexer 240 of the battery measurement subsystem 106. The multiplexer 240 may use this command to switch the battery ID input to the output of the battery measurement subsystem 106.

Fig. 5 includes a flowchart of an example battery capacity estimation method using a battery profile. A program for performing this method may, for example, be included in a software module in the mobile communication device of Fig. 1. As an example, Fig. 5 depicts a battery capacity estimation software module 124C, which is included in other software modules 124N and may be stored in a flash memory 124.

In operation, at step 310, the method samples the battery measurements that include various operating parameters of the battery, such as temperature (T), loaded voltage (V_load), current (I1), and transmit power (TXp). When the method is used in cooperation with the subsystem of Fig. 4, this step may include instructing the operating system 108 to send at least one selection signal to the multiplexer 240 of the battery measurement subsystem 106. The operating system 108 then reads the selected measurement for each selection signal sent at the output of the analog to digital converter 250.

At step 320, the battery measurements sampled at step 310 are pre-processed to provide intermediate results used in the battery capacity processing step 350. In preprocessing, at least one battery profile 330 is used to translate the measurement to a corresponding value (e.g., temperature to resistance).

Battery profile 330 may support a battery that a user may plug in and use on a mobile communication device. Each battery profile 330 identifies a given battery pack. In other words, for a specific battery there corresponds a specific battery profile 330.

As described below, values of the table in the profile 330 are dependent on the maker/model/version/batch of the battery. The values are determined at the time of battery manufacture and are loaded into the profile table 330. During use in the data server, the values may be updated through calibration between the mobile communication device and the data server.

Each battery profile 330 may include multiple tables that profile a particular battery. These tables may include the Equivalent Series Resistance (ESR) versus battery temperature (Tbat) 332, the current (I) versus transmit power (TXP) 334, the battery voltage threshold value at which the radio shuts off (VROFF) stored as a function of board temperature (Tbrd) 336, the battery capacity (CAP) as a function of unloaded voltage (V) 338, the battery capacity compensation factor at temperature Tbat 340, and the ESR compensation factor at temperature Tbat 342. This is illustrated as Profile 1 330.

One example of an intermediate result of the pre-processing step 320 may include ESR_VS_T 332. A table translates the temperature to resistance through linear interpolation in the battery capacity estimation method. The table size may, for example, be eight elements that are equally spaced between -20° to 75° C, unsigned. This interpolation can be expressed by:

$$ESR(Tbat) = Linear\_interpolate(ESR\_VS\_T, Tbat);$$

where Linear_interpolate (ESR_VS_T, Tbat) represents the linear interpolation of the table ESR_VS_T at temperature Tbat. The values stored in the table are the average values obtained by characterization of the battery pack upon manufacture. The battery capacity processing 350 takes place using the intermediate results of the above-described preprocessing step 320. The result of step 350 is the battery status info that is used to update the battery status of the mobile communication device.

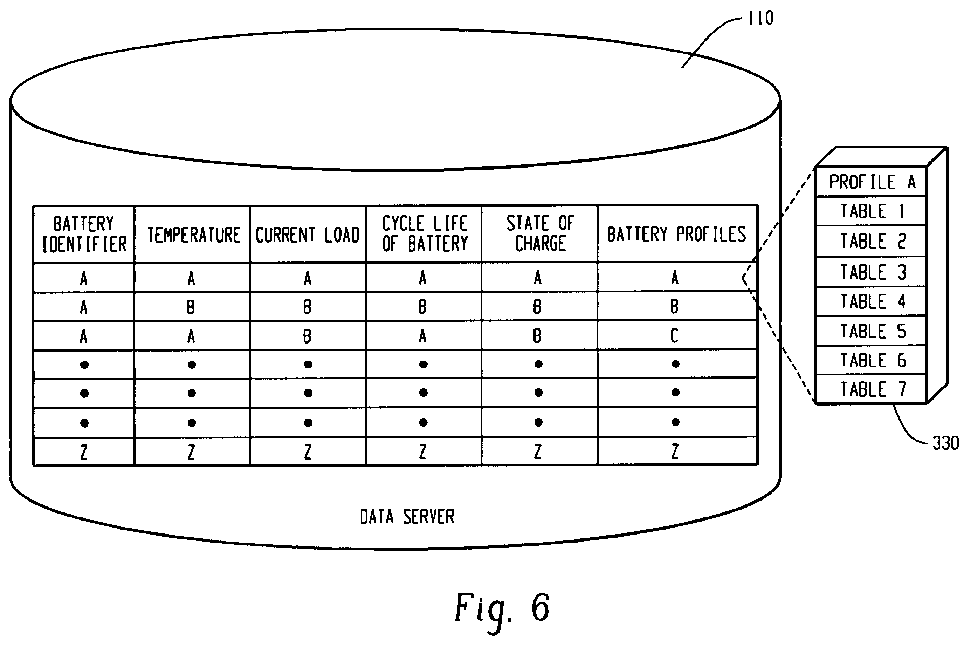

With reference to Fig. 6, an example data server 110 is depicted. The data server 110 is configured to store battery data in a table-like format with columns for a battery identifier, battery operating conditions, and battery profiles. The data for the battery operating conditions is stored in ranges, so that corresponding operating conditions received by the data server can be matched within a certain range of data. Other methods for storing data may also be used, such as storing specific values for each battery operating condition, and subsequently matching the received battery condition to the closest value in the table.

In the example shown, the data server 110 stores battery identifiers that correspond to a plurality of batteries that may be used in a mobile communication device. For each battery, there will correspond a plurality of battery operating conditions, such as temperature, current load, cycle life of battery, and state of charge. For each different combination of battery operating conditions with a battery identifier, there will correspond a battery profile. An example of a battery profile is shown as Profile A 330.

Based on the number of operating conditions, the battery profile 330 contains battery tables relating to a plurality of conditions. Profile A 330 shows seven battery tables as only one example. The method for calculating battery tables within a battery profile is described above in reference to Fig. 5. Depending on the data sent by the mobile communication device to the data server, the data server may either return the entire battery profile or one or more battery tables. If the data server does not receive a battery table selector from the mobile communication device, an entire battery profile will be sent. If the data server receives a battery table selector, then the data server will only return those battery tables specified by the battery table selector.

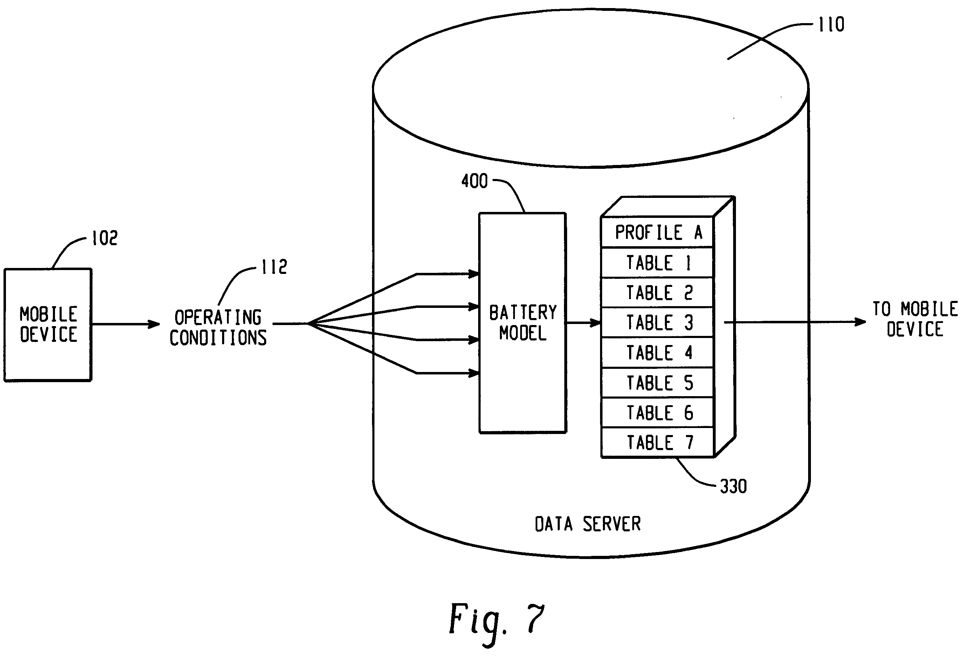

In another embodiment, the data server 110 includes a battery model 400, as shown in Fig. 7. In operation, the battery model 400 receives one or more operating conditions 112 from the mobile communication device 102. The battery model 400 utilizes the one or more operating conditions to generate one or more battery profiles. Because the battery model 400 does not store each battery profile in relation to battery operating conditions, the battery model 400 does not require as much storage capacity as the example data server in Fig. 6. Thus, by generating a battery profile for each request received from a mobile communication device, the battery model 400 may provide for a more efficient system.

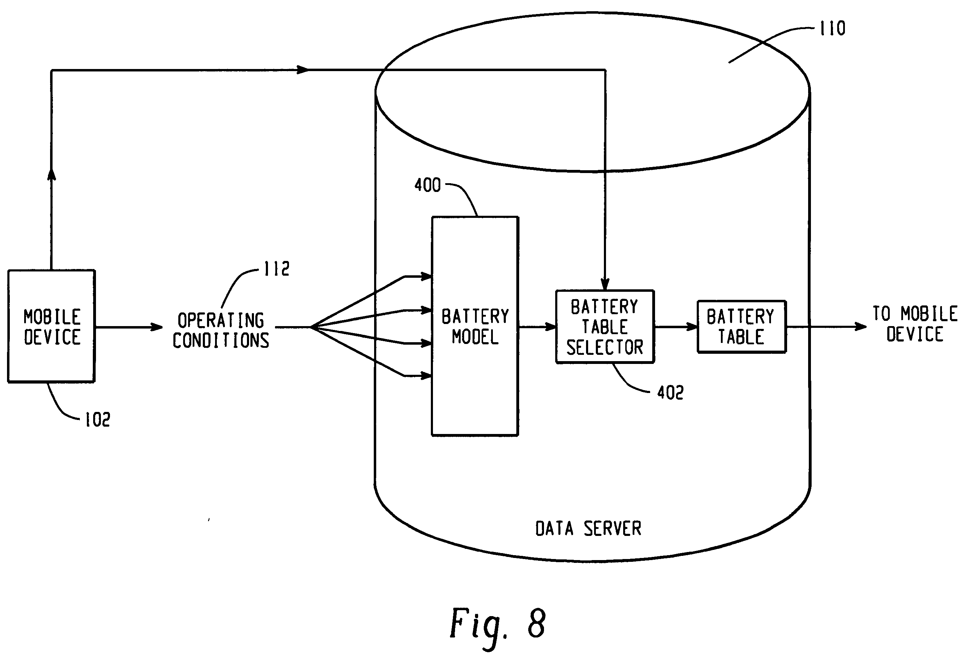

In another embodiment, the data server 110 includes a battery model 400 and a battery table selector module 402, as shown in Fig. 8. The battery model 400 operates in the same manner as described above in relation to Fig. 7. The battery table selector module 402 receives a battery table selector signal from the mobile communication device 102 that specifies a specific battery table to be sent to the mobile communication device. The battery model 400 may produce the entire battery profile, but the battery table selector module 402 specifies which table, or tables, in the profile will be sent to the mobile communication device 102. Therefore, the mobile communication device 102 does not receive an entire battery profile, and can only replace those corresponding tables in its pre-existing battery profile. This selection process reduces the processing requirement on the mobile communication device and network congestion.

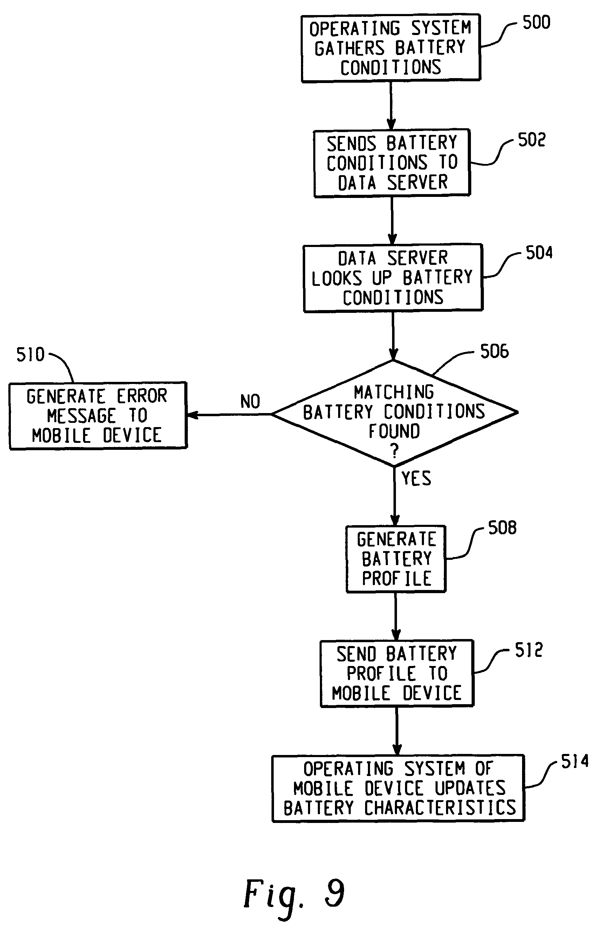

Fig. 9 is a flow diagram of an example method for downloading battery data on a mobile communication device. At step 500, the operating system of the mobile communication device obtains battery operating conditions from the battery measurement subsystem. The battery operating conditions are gathered by the battery measurement subsystem of the mobile communication device. If a triggering event occurs, then the operating system sends the battery operating conditions to the data server at step 502. At this step, the operating system may also send a battery table selector to the data server. The battery table selector may be utilized so that the data server only sends back the specified battery tables to the mobile communication device.

At step 504, the data server receives the one or more battery operating conditions from the mobile communication device and performs a search to find matching battery operating conditions for the battery. At step 506, the data server determines whether matching battery operating conditions are stored. If matching battery operating conditions are present in the data server, then the data server generates the corresponding battery profile at step 508. Depending on the mode of operation, the data server may generate the battery profile based on a corresponding profile identified, as described in relation to Fig. 6. The data server may also generate a battery profile using the battery model as explained above with reference to Fig. 7. For either method, if the battery operating conditions received from the mobile communication device do not match operating conditions on the data server that are associated with the specific battery, then the data server generates an error message at step 510 that is sent to the mobile communication device.

If a battery profile is generated by the data server, at step 512, then the data server sends the battery profile to the mobile communication device. If the mobile communication device sent the data server a battery table selector at step 502, then the data server only sends the selected battery table, or tables. At step 514, the operating system of the mobile communication device may use the battery profile to replace an existing battery profile. Likewise, if the data server only sends a battery table, the mobile communication device may only replace those tables that are received.

The method in Fig. 9 may also be configured so that the mobile communication device sends calibration information to the data server following step 514. The data server may use this calibration information to update the battery profiles so that a more accurate battery status can be calculated by the mobile communication device.

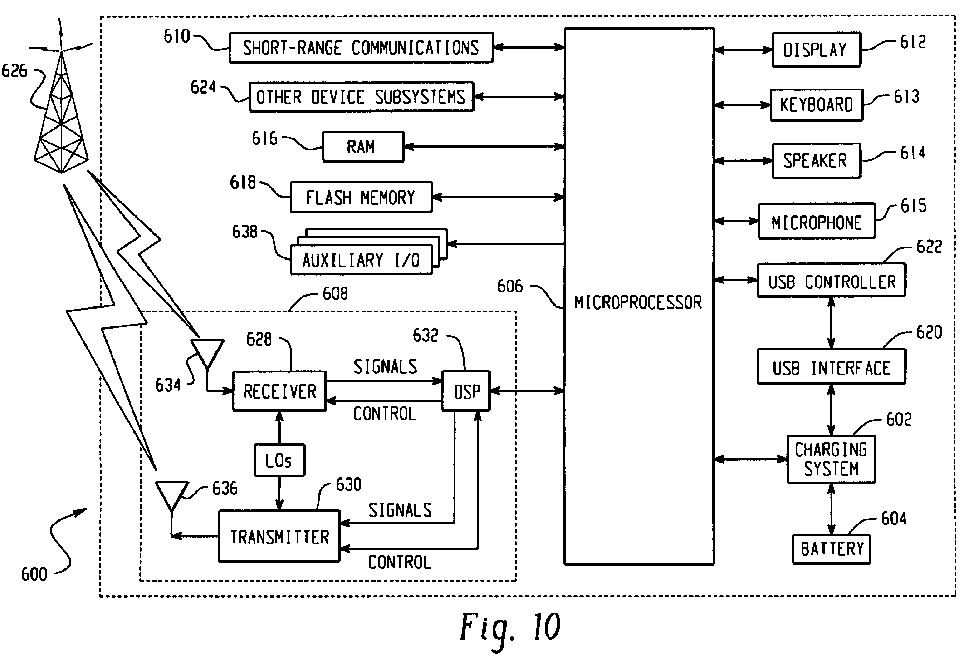

Fig. 10 is a block diagram of an example mobile device 600 that may include a system for determining the status of a battery. The mobile device 600 includes a charging subsystem 602 and a rechargeable battery 604. The charging subsystem 602 may include a battery measurement subsystem, as described herein. In addition, the rechargeable battery 604 may include an integrated memory device for storing battery deterioration information and/or other information pertaining to the battery 604. The mobile device 600 may also include a processing device 606, a communications subsystem 608, a short-range communications subsystem 610, input/output devices 612-615, memory devices 616, 618, a USB interface 620 and USB controller 622, and various other device subsystems 624.

In addition to measuring the status of a battery, the charging subsystem 602 charges the rechargeable battery 604 and provides power to the mobile device 600, either from the rechargeable battery 604 or from a USB host connected to the USB interface 620. The USB controller 622 monitors the USB data lines, and controls data communication between the processing device 606 and a USB host.

The processing device 606 controls the overall operation of the mobile device 600. Operating system software executed by the processing device 606 is preferably stored in a persistent store such as a flash memory 618, but may also be stored in other types of memory devices, such as a read only memory (ROM) or similar storage element. In addition, operating system software, specific device applications, or parts thereof, may be temporarily loaded into a volatile store, such as a random access memory (RAM) 616. Communication signals received by the mobile device 600 may also be stored to RAM 616.

The processing device 606, in addition to its operating system functions, enables execution of software applications on the device 600. A predetermined set of applications that control basic device operations, such as data and voice communications, may be installed on the device 600 during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via the wireless network 626. Preferably, the PIM data items are seamlessly integrated, synchronized and updated via the wireless network 626 with the device user's corresponding data items stored or associated with a host computer system.

Communication functions, including data and voice communications, are performed through the communication subsystem 608, and possibly through the short-range communications subsystem 610. If the mobile device 600 is enabled for two-way communications, then the communication subsystem 600 includes a receiver 628, a transmitter 630, and a processing module 632, such as a digital signal processor (DSP). In addition, the communication subsystem 608, configured as a two-way communications device, includes one or more, preferably embedded or internal, antenna elements 634, 636, and local oscillators (LOs) 638. The specific design and implementation of the communication subsystem 608 is dependent upon the communication network 626 in which the mobile device 600 is intended to operate. Network access requirements vary depending upon the type of communication system 626.

When required network registration or activation procedures have been completed, the mobile device 600 may send and receive communication signals over the communication network 626. Signals received by the antenna 634 through the communication network 626 are input to the receiver 628, which may perform such common receiver functions as signal amplification, frequency downconversion, filtering, channel selection, and analog-to-digital conversion. Analog-to-digital conversion of the received signal allows the DSP to perform more complex communication functions, such as demodulation and decoding. In a similar manner, signals to be transmitted are processed by the DSP 632, and are then input to the transmitter 630 for digital-to-analog conversion, frequency up-conversion, filtering, amplification and transmission over the communication network 608 via the antenna 636.

In addition to processing communication signals, the DSP 632 provides for receiver 628 and transmitter 630 control. For example, gains applied to communication signals in the receiver 628 and transmitter 630 may be adaptively controlled through automatic gain control algorithms implemented in the DSP 632.

In a data communication mode, a received signal, such as a text message or web page download, is processed by the communication subsystem 608 and input to the processing device 606. The received signal is then further processed by the processing device 606 for output to a display 612, or alternatively to some other auxiliary I/O device 638. A device user may also compose data items, such as e-mail messages, using a keyboard 613, such as a QWERTY-style keyboard, and/or some other auxiliary I/O device 638, such as a touchpad, a rocker switch, a thumb-wheel, or some other type of input device. The composed data items may then be transmitted over the communication network 626 via the communication subsystem 608.

In a voice communication mode, overall operation of the device 600 is substantially similar to data communication mode, except that received signals are output to a speaker 614, and signals for transmission are generated by a microphone 615. Alternative voice or audio I/O subsystems, such as a voice message recording subsystem, may also be implemented on the device 600. In addition, the display 612 may also be utilized in voice communication mode, for example to display the identity of a calling party, the duration of a voice call, or other voice call related information.

The short-range communications subsystem 610 enables communication between the mobile device 600 and other proximate systems or devices, which need not necessarily be similar devices. For example, the short-range communications subsystem 610 may include an infrared device and associated circuits and components, or a Bluetooth™ communication module to provide for communication with similarly-enabled systems and devices.

This written description uses examples to disclose the invention, including the best mode, and also to enable a person skilled in the art to make and use the invention. The patentable scope of the invention is defined by the appended claims.

**Claims**

1. A system (100) for downloading battery data to a mobile communication device (102), the system comprising:

the mobile communication device (102) comprising a battery (104) configured to power the mobile communication device (102) and a sensor device (106) configured to monitor a current battery operating condition (112), wherein the mobile communication device (102) is configured to send the current battery operating condition (112) to a data server (110) after a predetermined event and the mobile communication device (102) is further configured to receive a battery profile (116), the battery profile (116) includes battery data for use by the mobile communication device (102) to calculate battery status information (114), and the current battery operating condition (112) is gathered from the battery (104); and
the data server (110) being configured to store battery data, receive the current battery operating condition (112) from the mobile communication device (102) and, based on the current battery operating condition (112), send the battery profile (116) to the mobile communication device (102).

2. The system (100) of claim 1, wherein the data server (110) stores a plurality of battery profiles (116) in relation to a plurality of battery operating conditions (112).

3. The system (100) of claim 1, wherein the data server (110) comprises a battery model (400), the battery model (400) being configured to generate a battery profile (116).

4. The system (100) of claim 3, wherein the battery profile (116) comprises a plurality of tables (332) and wherein the battery model (400) is configured to generate a table (332) of the battery profile (116).

5. The system (100) of claim 1, wherein the battery status information (114) is full-charge battery capacity.

6. The system (100) of claim 1, wherein the battery status information (114) is usable battery capacity.

7. The system (100) of claim 1, wherein the battery status information (114) is equivalent series resistance.

8. The system (100) of claim 1, wherein the mobile communication device (102) is configured to send the current battery operating condition (112) to the data server (110) after a user request.

9. The system (100) of claim 1, wherein if the data server (110) does not contain battery data corresponding to the current battery operating condition (112), the data server (110) is configured to send an error message to the mobile communicatlon device (102).

10. The system (100) of claim 1, wherein the data server (110) stores the current battery operating condition (112) received from the mobile communication device (102).

11. The system (100) of claim 1, wherein the battery profile (116) comprises a plurality of tables (332) and wherein the mobile communication device (102) receives a table (332) of the battery profile (116).

12. The system (100) of claim 11, wherein the mobile communication device (102) is configured to select a table (332) of the battery profile (116) to be sent from the data server (110).

13. The system (100) of claim 1, wherein the mobile communication device (102) is configured to replace an existing battery profile (116) with the battery profile (116) received from the data server (110).

14. The system (100) of claim 11, wherein the battery profile (116) comprises a plurality of tables (332) and wherein the mobile communication device (332) is configured to replace a table (332) of an existing battery profile (116) with the table (332) of the battery profile (116) received from the data server (110).

15. A mobile communication device (102) comprising:

a battery (104) configured to power the mobile communication device (102);
one or more sensor devices (106) configured to monitor a current operating condition (112) of the battery (104); and
an operating system (108) configured to receive the current battery operating condition (112) gathered from the battery (104) and create an existing battery profile (116), the existing battery profile (116) being used to calculate battery status information (114), the operating system (108) being further configured to send the current battery operating condition (112) to a data server (110) after a predetermined event and to receive a current battery profile (116) corresponding to the current battery profile (116) in the data server for the current battery operating condition (112);

wherein the current battery profile (116) can be used to replace the existing battery profile (116).

16. The device (102) of claim 15, wherein the battery status information (114) is battery capacity.

17. A data server (110) for storing battery profiles (116), wherein the data server (110) is configured to store:

a plurality of battery identifiers, the plurality of battery identifiers corresponding to a battery type;
a plurality of battery operating conditions (112), the plurality of battery operating conditions (112) including operating characteristics for each battery type; and
a plurality of battery profiles (116) corresponding to a battery identifier and a plurality of battery operating conditions (112), the plurality of battery profiles (116) containing information used to calculate battery status information (114) and replace an existing battery profile (116) on a mobile communication device (102);

wherein the data server (110) is further configured to receive a current operating condition (112) gathered from a battery (104) of the mobile communication device (102) from the mobile communication device (102) and send a battery profile (116) to the mobile communication device (102) corresponding to the current operating condition (116).

18. A method for wirelessly downloading battery data on a mobile communication device (102) comprising a battery (104) configured to power the mobile communication device (102), the method comprising:

sending a current operating condition (112) gathered from the battery (104) of the mobile communication device (102) from the mobile communication device (102) to a data server (110) after a predetermined event, the data server (110) comprising battery data, the battery data comprising a plurality of battery profiles (116) corresponding to a plurality of battery operating conditions (112);
retrieving, from the data server (110), a battery profile (116) corresponding to the current operating condition (112);
receiving, at the mobile communication device (102), the battery profile (116); and
calculating battery status information (114) on the mobile communication device (102) using the battery profile (116).

**Patentansprüche**

1. Ein System (100) zum Downloaden von Batteriedaten auf eine mobile Kommunikationsvorrichtung (102), wobei das System umfasst:

dass die mobile Kommunikationsvorrichtung (102) eine Batterie (104) umfasst, die konfiguriert ist, um die mobile Kommunikationsvorrichtung (102) und eine Sensorvorrichtung (106), die konfiguriert ist eine aktuelle Batteriebetriebsbedingung (112) zu überwachen, zu betreiben, wobei die mobile Kommunikationsvorrichtung (102) konfiguriert ist, um die aktuelle Batteriebetriebsbedingung (112) an einen Datenserver (110) zu senden nach einem vorbestimmten Ereignis, und wobei die mobile Kommunikationsvorrichtung (102) ferner konfiguriert ist, um ein Batterieprofil (116) zu erhalten, wobei das Batterieprofil (116) Batteriedaten aufweist zum Benutzen durch die mobile Kommunikationsvorrichtung (102), um Batteriestatusinformation (114) zu berechnen, und wobei die aktuelle Batteriebetriebsbedingung (112) von der Batterie (104) erfasst wird; und
dass der Datenserver (110) konfiguriert ist, um Batteriedaten zu speichern, die aktuelle Batteriebetriebsbedingung in (112) von der mobilen Kommunikationsvorrichtung (102) zu erhalten und, basierend auf der aktuellen Batteriebetriebsbedingung (112), das Batterieprofil (116) an die mobile Kommunikationsvorrichtung (102) zu senden.

2. Das System (100) nach Anspruch 1, wobei der Datenserver (110) eine Vielzahl von Batterieprofilen (116) speichert in Relation zu einer Vielzahl von Batteriebetriebsbedingungen (112).

3. Das System (100) nach Anspruch 1, wobei der Datenserver (110) ein Batteriemodell (400) umfasst, wobei das Batteriemodell (400) konfiguriert ist, um ein Batterieprofil (116) zu erzeugen.

4. Das System (100) nach Anspruch 3, wobei das Batterieprofil (116) eine Vielzahl von Tabellen (332) umfasst, und wobei das Batteriemodell (400) konfiguriert ist, um eine Tabelle (332) des Batterieprofils (116) zu erzeugen.

5. Das System (100) nach Anspruch 1, wobei die Batteriestatusinformation (114) vollgeladene Batteriekapazität ist.

6. Das System (100) nach Anspruch 1, wobei die Batteriestatusinformation (114) benutzbare Batteriekapazität ist.

7. Das System (100) nach Anspruch 1, wobei die Batteriestatusinformation (114) äquivalenter Reihenwiderstand ist.

8. Das System (100) nach Anspruch 1, wobei die mobile Kommunikationsvorrichtung (102) konfiguriert ist, um die aktuelle Batteriebetriebsbedingung (112) nach einer Benutzeranfrage an den Datenserver (110) zu senden.

9. Das System (100) nach Anspruch 1, wobei, wenn der Datenserver (110) keine Batteriedaten aufweist, die zu der aktuellen Batteriebetriebsbedingung (112) korrespondieren, der Datenserver (110) konfiguriert ist, um eine Fehlemachricht an die mobile Kommunikationsvorrichtung (102) zu senden.

10. Das System (100) nach Anspruch 1, wobei der Datenserver (110) die aktuelle Batteriebetriebsbedingung (112) speichert, die von der mobilen Kommunikationsvorrichtung (102) erhalten wurde.

11. Das System (100) nach Anspruch 1, wobei das Batterieprofil (116) eine Vielzahl von Tabellen (332) umfasst, und wobei die mobile Kommunikationsvorrichtung (102) eine Tabelle (332) des Batterieprofils (116) erhält.

12. Das System (100) nach Anspruch 11, wobei die mobile Kommunikationsvorrichtung (102) konfiguriert ist, um eine Tabelle (332) des Batterieprofils (116) auszuwählen, die von dem Datenserver (110) gesendet werden soll.

13. Das System (100) nach Anspruch 1, wobei die mobile Kommunikationsvorrichtung (102) konfiguriert ist, ein existierendes Batterieprofil (116) mit dem Batterieprofil (116) zu ersetzen, das von dem Datenserver (110) erhalten wurde.

14. Das System (100) nach Anspruch 11, wobei das Batterieprofil (116) eine Vielzahl von Tabellen (332) umfasst, und wobei die mobile Kommunikationsvorrichtung (332) konfiguriert ist, um eine Tabelle (332) eines existierenden Batterieprofils (116) mit der Tabelle (332) des Batterieprofils (116) zu ersetzen, das von dem Datenserver (110) erhalten wurde.

15. Eine mobile Kommunikationsvorrichtung (102), umfassend:

eine Batterie (104), die konfiguriert ist, die mobile Kommunikationsvorrichtung (102) zu betreiben;
ein oder mehrere Sensorvorrichtungen (106), die konfiguriert sind, um eine aktuelle Betriebsbedingung (112) der Batterie (104) zu überwachen; und
ein Betriebssystem (108), das konfiguriert ist, um die aktuelle Betriebsbedingung (112), die von der Batterie (104) erfasst wird, zu erhalten und ein existierendes Batterieprofil (116) zu erzeugen, wobei das existierende Batterieprofil (116) benutzt wird, um Batteriestatusinformation (114) zu berechnen, wobei das Betriebssystem (108) ferner konfiguriert ist, um die aktuelle Batteriebetriebsbedingung (112) an einen Datenserver (110) nach einem vorbestimmten Ereignis zu senden, und um ein aktuelles Batterieprofil (116) zu erhalten, das mit dem aktuellen Batterieprofil (116) in dem Datenserver für die aktuelle Batteriebetriebsbedingung (112) korrespondiert;

wobei das aktuelle Batterieprofil (116) genutzt werden kann, um das existierende Batterieprofil (116) zu ersetzen.

16. Die Vorrichtung (102) nach Anspruch 15, wobei die Batteriestatusinformation (114) Batteriekapazität ist.

17. Ein Datenserver (110) zum Speichern von Batterieprofilen (116), wobei der Datenserver (110) konfiguriert ist, um zu speichern:

eine Vielzahl von Batterieidentifikatoren, wobei die Vielzahl von Batterieidentifikatoren zu einem Batterietyp korrespondiert;
eine Vielzahl von Batteriebetriebsbedingungen (112), wobei die Vielzahl von Batteriebetriebsbedingungen (112) Betriebscharakteristiken für jeden Batterietyp aufweist; und
eine Vielzahl von Batterieprofilen (116), die zu einem Batterieidentifikator und einer Vielzahl von Batteriebetriebsbedingungen (112) korrespondieren, wobei die Vielzahl von Batterieprofilen (116) Information aufweist, die benutzt wird, um Batteriestatusinformation (114) zu berechnen und ein existierendes Batterieprofil (116) auf einer mobilen Kommunikationsvorrichtung (102) zu ersetzen;

wobei der Datenserver (110) ferner konfiguriert ist, eine aktuelle Betriebsbedingung (112), die von einer Batterie (104) der mobilen Kommunikationsvorrichtung (102) erfasst wurde, von der mobilen Kommunikationsvorrichtung (102) zu erhalten und ein Batterieprofil (116) an die mobile Kommunikationsvorrichtung (102) zu senden, das zu der aktuellen Betriebsbedingung (116) korrespondiert.

18. Ein Verfahren zum drahtlosen Downloaden von Batteriedaten auf eine mobile Kommunikationsvorrichtung (102) umfassend eine Batterie (104), die konfiguriert ist, um die mobile Kommunikationsvorrichtung (102) zu betreiben, wobei das Verfahren umfasst:

Senden einer aktuellen Betriebsbedingung (112), die von der Batterie (104) der mobilen Kommunikationsvorrichtung (102) erfasst wurde, von der mobilen Kommunikationsvorrichtung (102) an einen Datenserver (110) nach einem vorbestimmten Ereignis, wobei der Datenserver (110) Batteriedaten umfasst, wobei die Batteriedaten eine Vielzahl von Batterieprofilen (116) umfassen, die zu einer Vielzahl von Batteriebetriebsbedingungen (112) korrespondieren;
Abrufen, von dem Datenserver (110), eines Batterieprofils (116), das zu der aktuellen Betriebsbedingung (112) korrespondiert;
Erhalten, an der mobilen Kommunikationsvorrichtung (102), des Batterieprofils (116); und
Berechnen von Batteriestatusinformation (114) auf der mobilen Kommunikationsvorrichtung (102) unter Benutzung des Batterieprofils (116).

## Revendications

1. Système (100) destiné à télécharger des données de batterie vers un dispositif de communication mobile (102), le système comprenant :

le dispositif de communication mobile (102), comprenant une batterie (104) configurée pour alimenter le dispositif de communication mobile (102) et un dispositif capteur (106) configuré pour surveiller un état courant de fonctionnement de la batterie (112), le dispositif de communication mobile (102) étant configuré pour envoyer l'état courant de fonctionnement de la batterie (112) à un serveur de données (110) après un événement prédéterminé et le dispositif de communication mobile (102) étant en outre configuré pour recevoir un profil de batterie (116), le profil de batterie (116) comprenant des données de batterie destinées à être utilisées par le dispositif de communication mobile (102) pour calculer des informations d'état de batterie (114), et l'état courant de fonctionnement de la batterie (112) étant recueilli auprès de la batterie (104) ; et
le serveur de données (110), configuré pour enregistrer les données de batterie, recevoir l'état courant de fonctionnement de la batterie (112) venant du dispositif de communication mobile (102), et, en fonction de l'état courant de fonctionnement de la batterie (112), envoyer le profil de batterie (116) au dispositif de communication mobile (102).

2. Système (100) selon la revendication 1, dans lequel le serveur de données (110) stocke une pluralité de profils de batterie (116) en fonction d'une pluralité d'états de fonctionnement de batterie (112).

3. Système (100) selon la revendication 1, dans lequel le serveur de données (110) comprend un modèle de batterie (400), le modèle de batterie (400) étant configuré pour générer un profil de batterie (116).

4. Système (100) selon la revendication 3, dans lequel le profil de batterie (116) comprend une pluralité de tables (332) et dans lequel le modèle de batterie (400) est configuré pour générer une table (332) du profil de batterie (116).

5. Système (100) selon la revendication 1, dans lequel les informations d'état de batterie (114) sont la capacité de la batterie à pleine charge.

6. Système (100) selon la revendication 1, dans lequel les informations d'état de batterie (114) sont une capacité exploitable de la batterie.

7. Système (100) selon la revendication 1, dans lequel les informations d'état de batterie (114) sont une résistance équivalente en série.

8. Système (100) selon la revendication 1, dans lequel le dispositif de communication mobile (102) est configuré pour envoyer l'état courant de fonctionnement de la batterie (112) au serveur de données (110) après une demande de l'utilisateur.

9. Système (100) selon la revendication 1, dans lequel, si le serveur de données (110) ne contient pas de données de batterie correspondant à l'état courant de fonctionnement de la batterie (112), le serveur de données (110) est configuré pour envoyer un message d'erreur au dispositif de communication mobile (102).

10. Système (100) selon la revendication 1, dans lequel le serveur de données (110) stocke l'état courant de fonctionnement de la batterie (112) qui a été reçu du dispositif de communication mobile (102).

11. Système (100) selon la revendication 1, dans lequel le profil de batterie (116) comprend une pluralité de tables (332) et dans lequel le dispositif de communication mobile (102) reçoit une table (332) du profil de batterie (116).

12. Système (100) selon la revendication 11, dans lequel le dispositif de communication mobile (102) est configuré pour sélectionner une table (332) du profil de batterie (116) qui doit être envoyée au serveur de données (110).

13. Système (100) selon la revendication 1, dans lequel le dispositif de communication mobile (102) est configuré pour remplacer un profil de batterie (116) existant par le profil de batterie (116) reçu du serveur de données (110).

14. Système (100) selon la revendication 11, dans lequel le profil de batterie (116) comprend une pluralité de tables (332) et dans lequel le dispositif de communication mobile (102) est configuré pour remplacer une table (332) d'un profil de batterie (116) existant par la table (332) du profil de batterie (116) reçu du serveur de données (110).

15. Dispositif de communication mobile (102) comprenant :

   une batterie (104) configurée pour alimenter le dispositif de communication mobile (102) ;
   un ou plusieurs dispositifs capteurs (106) configurés pour surveiller un état courant de fonctionnement (112) de la batterie (104) ; et
   un système d'exploitation (108) configuré pour recevoir l'état courant de fonctionnement de la batterie (112) recueilli auprès de la batterie (104) et pour créer un profil de batterie existant (116), le profil de batterie existant (116) étant utilisé pour calculer des informations d'état de batterie (114), le système d'exploitation (108) étant en outre configuré pour envoyer l'état courant de fonctionnement de la batterie (112) à un serveur de données (110) après un événement prédéterminé et pour recevoir un profil de batterie courant (116) correspondant au profil de batterie courant (116) existant dans le serveur de données pour l'état courant de fonctionnement de la batterie (112) ;

   dans lequel le profil de batterie courant (116) peut être utilisé pour remplacer le profil de batterie existant (116).

16. Dispositif (102) selon la revendication 15, dans lequel les informations d'état de batterie (114) sont la capacité de la batterie.

17. Serveur de donnés (110) destiné à stocker des profils de batterie (116), le serveur de données (110) étant configuré pour stocker :

   une pluralité d'identificateurs de batterie, la pluralité d'identificateurs de batterie correspondant à un type de batterie ;
   une pluralité d'états de fonctionnement de batterie (112), la pluralité d'états de fonctionnement de batterie (112) incluant des caractéristiques de fonctionnement pour chaque type de batterie ; et
   une pluralité de profils de batterie (116) correspondant à un identificateur de batterie et à une pluralité d'états de fonctionnement de batterie (112), la pluralité de profils de batterie (116) contenant des informations utilisées pour calculer des informations d'état de batterie (114) et remplacer un profil de batterie courant (116) sur un dispositif de communication mobile (102) ;

   le serveur de données (110) étant en outre configuré pour recevoir d'un dispositif de communication mobile (102) un état courant de fonctionnement (112) recueilli auprès d'une batterie (104) du dispositif de communication mobile (102) et pour envoyer au dispositif de communication mobile (102) un profil de batterie (116) qui correspond à l'état courant de fonctionnement (112).

18. Procédé de téléchargement sans fil de données de batterie sur un dispositif de communication mobile (102) comprenant une batterie (104) configurée pour alimenter le dispositif de communication mobile (102), le procédé comprenant les étapes consistant à :

envoyer un état courant de fonctionnement (112), recueilli auprès de la batterie (104) du dispositif de communication mobile (102), entre le dispositif de communication mobile (102) et un serveur de données (110) après un événement prédéterminé, le serveur de données (110) comprenant des données de batterie, les données de batterie comprenant une pluralité de profils de batterie (116) correspondant à une pluralité d'états de fonctionnement de batterie (112) ;

obtenir du serveur de données (110) un profil de batterie (116) correspondant à l'état courant de fonctionnement (112) ;

recevoir le profil de batterie (116) sur le dispositif de communication mobile (102) ; et

calculer des informations d'état de batterie (114) sur le dispositif de communication mobile (102) à l'aide du profil de batterie (116).

Fig. 1

Fig. 2

Fig. 3

EP 2 224 575 B1

*Fig. 4*

124 — FLASH MEMORY ◄─────► OPERATING SYSTEM

108

124N

124C — OTHER SOFTWARE MODULES

BATTERY CAPACITY ESTIMATION SOFTWARE MODULE

SAMPLE BATTERY MEASUREMENTS — 310

330 —

PROFILE 1

ESR_VS_T — 332
I_VS_TXP — 334
VROFF_VS_T — 336
CAP_VS_V — 338
FCAP_VS_T — 340
FESR_VS_T — 342

BATTERY MEASUREMENTS PRE-PROCESSING — 320

BATTERY CAPACITY PROCESSING — 350

BATTERY STATUS INFO — 360

*Fig. 5*

| BATTERY IDENTIFIER | TEMPERATURE | CURRENT LOAD | CYCLE LIFE OF BATTERY | STATE OF CHARGE | BATTERY PROFILES |
|---|---|---|---|---|---|
| A | A | A | A | A | A |
| A | B | B | B | B | B |
| A | A | B | A | B | C |
| • | • | • | • | • | • |
| • | • | • | • | • | • |
| • | • | • | • | • | • |
| Z | Z | Z | Z | Z | Z |

DATA SERVER

| PROFILE A |
|---|
| TABLE 1 |
| TABLE 2 |
| TABLE 3 |
| TABLE 4 |
| TABLE 5 |
| TABLE 6 |
| TABLE 7 |

*Fig. 6*

*Fig. 7*

Fig. 8

Fig. 9

Fig. 10

EP 2 224 575 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1148613 A
- US 2006049805 A